Europäisches Patentamt

European Patent Office

Office européen des brevets

(19)

(11) **EP 1 280 066 A2**

(12) **EUROPEAN PATENT APPLICATION**

(43) Date of publication:
**29.01.2003 Bulletin 2003/05**

(51) Int Cl.⁷: **G06F 15/177**

(21) Application number: **02004211.5**

(22) Date of filing: **25.02.2002**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **23.07.2001 JP 2001220941**

(71) Applicant: **Hitachi, Ltd.**
**Chiyoda-ku, Tokyo 101 (JP)**

(72) Inventor: **Hanawa, Kazuhiko, Hitachi, Ltd.,**
**Intell.Prop.Group**
**Chiyoda-ku, Tokyo 100-8220 (JP)**

(74) Representative: **Beetz & Partner Patentanwälte**
**Steinsdorfstrasse 10**
**80538 München (DE)**

(54) **Signal processing apparatus having a plurality of microcomputers and a shared rom**

(57) A signal processing apparatus using a plurality of microcomputers and a shared ROM. A microcomputer-A (10) is connected to a microcomputer-B (11) by way of a serial interface (60) and a GPIO signal line (70). A flash ROM (13) incorporated in the microcomputer-A (10) has a program memory map (400) corresponding to the microcomputer-A (10), wherein a run start address (405) of the microcomputer-B (11), a program data size (406) and program data (407) therefor are disposed in a parameter table area (403) of the program memory map (400) corresponding to the microcomputer-A (10). Upon power-up, the microcomputer-A (10) transfers data to the microcomputer-B (11) via the serial interface (60), whereupon the microcomputer-B (11) executes signal processing in the ordinary operation mode.

## FIG.1

**Description**

BACKGROUND OF THE INVENTION

The present invention generally relates to a signal processing apparatus. More particularly, the present invention is concerned with a signal processing apparatus which incorporates a plurality of microcomputers for executing signal processings and a rewritable memory for storing program data of these microcomputers.

Heretofore, there is known such signal processing apparatus in which a plurality of microcomputers are employed with a view to enhancing or increasing the signal processing speed. As the schemes for sharing the roles among the plurality of microcomputers, it is known to allot similar signal processings to all the microcomputers so that the microcomputers perform the signal processings in parallel or alternatively allot different roles to the microcomputers, respectively, such that one microcomputer executes diagnosis function for the signal processing apparatus itself and external interface(s) while the other microcomputer executes exclusively the signal processings.

Further, in the signal processing apparatus for which high-speed signal processing is required, a DSP (Digital Signal Processor) may be employed. In this conjunction, the DSP may be implemented in such a configuration that upon power-up of the signal processing apparatus, the DSP reads out program data stored in a ROM (Read-Only Memory) to develop or expand the program data on an SRAM (Static Random Access Memory) which allows high-speed access thereto, whereon the DSP performs ordinary operations.

Currently, there are available several different types of ROMs. By way of example, a mask ROM may be mentioned as one of them. This mask ROM is incorporated in the microcomputer in advance. Once the program data have been embedded, the contents thereof can no more be rewritten. However, since the mask ROM is relatively inexpensive, the mask ROM is profitable and advantageous for embedding therein the program data which need not be rewritten after the signal processing apparatus has been completed or finished. As another type of the mask ROM, a rewritable ROM such as a flash ROM may be mentioned. Although the rewritable ROM is relatively expensive, version-up of software stored in the rewritable ROM can easily be effectuated even after the signal processing apparatus has been finished. Accordingly, in the case where version-up of software is possibly required in the finished signal processing apparatus, the rewritable flash ROM is employed. Such being the circumstances, in the case of the signal processing apparatus which incorporates two or more microcomputers for each of which rewriting of the program data is required, a corresponding number of flash ROMs have to be employed for storing the program data for the individual microcomputers, respectively, which however gives rise to a problem that the cost of the signal processing apparatus increases.

For coping with the problem mentioned above, such a signal processing apparatus has been proposed in which a single ROM which stores program data is shared between two microcomputers, as disclosed, for example, in JP-A-8-55097.

SUMMARY OF THE INVENTION

However, the signal processing apparatus in which the single ROM is shared among a plurality of microcomputers, as described in JP-A-8-55097, suffers from a problem that the number of component parts increases because flip-flop, selector, output switching circuit and the like parts are required.

In the light of the state of the art described above, it is an object of the present invention to provide a signal processing apparatus in which a plurality microcomputers can be employed together with a single shared ROM without involving the problem that the number of parts increases.

(1) For achieving the object mentioned above, there is provided according to an aspect of the present invention a signal processing apparatus which includes a first computing unit and a second computing unit which are arranged to operate independent of each other, and an interface interconnecting the first computing unit and the second computing unit, wherein upon power-up of the signal processing apparatus, the first computing unit transfers data to the second computing unit by way of the interface, whereupon signal processings in an ordinary operation mode is executed.

By virtue of the arrangement described above, the signal processing apparatus incorporating a plurality of microcomputers and a single shared ROM can be realized with the number of constituent parts being significantly decreased, to a great advantage.

(2) In the signal processing apparatus set forth in the above paragraph (1), the first computing unit should preferably be so designed as to transfer to the second computing unit the data as required by the latter.

(3) In the signal processing apparatus set forth in the above paragraph (1), it is preferred to further provide a data-rewritable nonvolatile memory which has a program memory map corresponding to the first computing unit, wherein a run start address of the second computing unit as well as a program data size and program data therefor are arrayed in a parameter table area of the program memory map corresponding to the first computing unit.

(4) In the signal processing apparatus set forth in the above paragraph (1), the interface should preferably be realized by a serial interface and a general-purpose signal line.

(5) In the signal processing apparatus set forth in the above paragraph (4), the first and second computing units should preferably be so arranged that upon power-up of the signal processing apparatus, the first computing unit firstly transfers data of a predetermined unitary amount to the second computing unit via the serial interface, while the second computing unit inverts polarity of the general-purpose signal line after lapse of a predetermined time since the end of the first data transfer, and when the first computing unit starts again the data transfer, the second computing unit inverts again the polarity of the general-purpose signal line, to thereby carry out the data transfer upon power-up of the signal processing apparatus through repetition of the data transfer and the polarity inversion of the general-purpose signal line mentioned above, whereupon signal processing in an ordinary operation mode is executed.

(6) In the signal processing apparatus set forth in the above paragraph (1), the second computing unit should preferably be equipped with a read-only memory incorporated therein and a volatile memory incorporated therein or alternatively connected thereto by way of an address bus and a data bus.

The above and other objects, features and attendant advantages of the present invention will more easily be understood by reading the following description of the preferred embodiments thereof taken, only by way of example, in conjunction with the accompanying drawings.

BRIEF DESCRIPTION OF THE DRAWINGS

In the course of the description which follows, reference is made to the drawings, in which:

Fig. 1 is a system block diagram showing generally and schematically a configuration or arrangement of a signal processing apparatus according to a first embodiment of the present invention;

Fig. 2 is a flow chart for illustrating contents of a power-up processing procedure executed upon power-up of the signal processing apparatus according to the first embodiment of the present invention;

Fig. 3 is a timing chart for illustrating data transfer process when the power-up processing is executed in the signal processing apparatus according to the first embodiment of the present invention;

Figs. 4A and 4B are views showing memory maps used in the signal processing apparatus according to the first embodiment of the present invention, wherein Fig. 4A shows a memory map of a flash ROM, and Fig. 4B shows a memory map of an SRAM;

Fig. 5 is a flow chart for illustrating a procedure of generating a flash ROM memory map in the signal processing apparatus according to the first embodiment of the present invention; and

Fig. 6 is a system block diagram showing generally and schematically an arrangement of the signal processing apparatus according to a second embodiment of the present invention.

DESCRIPTION OF THE EMBODIMENTS

In the following, the present invention will be described in detail in conjunction some embodiments by reference to the drawings.

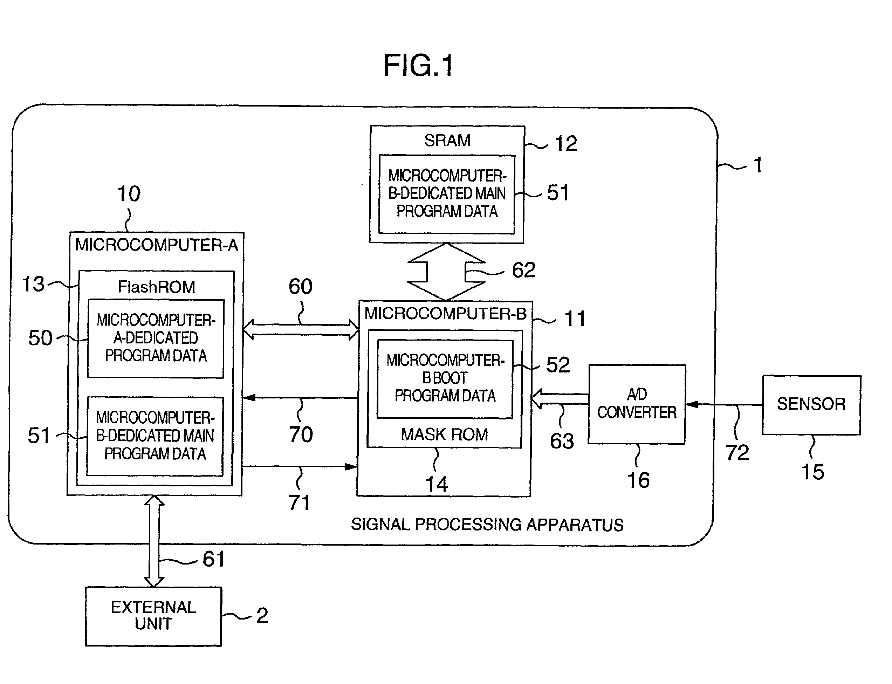

Now, referring to Figs. 1 to 5, description will be made of configuration and operation of the signal processing apparatus according to a first embodiment of the present invention.

At first, description is directed to a general arrangement of the signal processing apparatus according to the instant embodiment by reference to Fig. 1 which is a system block diagram showing generally a configuration of the signal processing apparatus according to the first embodiment of the present invention.

Referring to Fig. 1, the signal processing apparatus denoted generally by a reference numeral 1 incorporates therein a pair of microcomputers, i.e., microcomputer-A 10 and a microcomputer-B 11, an SRAM (Static Random Access Memory) 12 and an A/D (Analogue-to-Digital) converter 16.

The microcomputer-A 10 includes a flash ROM 13 in which microcomputer-A-dedicated program data 50 and microcomputer-B-dedicated main program data 51 are stored. In other words, in the signal processing apparatus according to the instant embodiment of the invention, only one flash ROM is employed in which both the microcomputer-A-dedicated program data 50 and the microcomputer-B-dedicated main program data 51, i.e., program data for the microcomputer-A 10 and main program data for the microcomputer-B 11, are stored.

The microcomputer-B 11 incorporates therein a mask ROM 14 which serves to store microcomputer-B boot program data 52 which is activated upon power-up of the signal processing apparatus. The microcomputer-A 10 and the microcomputer-B 11 are interconnected via a serial interface 60, a general-purpose input/output signal line (hereinafter also referred to simply as the GPIO signal line) 70 and a GPIO signal line 71.

The microcomputer-B-dedicated main program data 51 is stored in the SRAM 12 in the ordinary operation. The microcomputer-B 11 and the SRAM 12 are interconnected via a parallel bus 62.

An analogue signal inputted from a sensor 15 is sent to the A/D converter 16 by way of a signal line 72 to undergo analogue-to-digital conversion, the resulting digital signal being inputted to the microcomputer-B 11. The microcomputer-A 10 is equipped with a serial interface 61 for conducting communication with an external unit 2.

Upon power-up of the signal processing apparatus, the microcomputer-A 10 executes processing in accordance with the control contents of the microcomputer-A-dedicated program data 50 stored in the flash ROM 13. Similarly, at this time point, the microcomputer-B 11 executes processing in accordance with the control contents of the microcomputer-B boot program data 52 stored in the mask ROM 14.

The microcomputer-A 10 transfers the microcomputer-B-dedicated main program data 51 to the microcomputer-B 11 by way of the serial interface 60. Transfer of the microcomputer-B-dedicated main program data 51 to the microcomputer-B 11 is carried out by dividing the microcomputer-B-dedicated main program data into data blocks each of a given or predetermined block size. Every time the reception of the one data block has been completed, the microcomputer-B 11 sends an acknowledge signal to the microcomputer-A 10 by way of the GPIO signal line 70. In the case where error should take place in the course of the data transfer, the microcomputer-A 10 sends a reset signal to the microcomputer-B 11 via the GPIO signal line 71. The microcomputer-B 11 develops or expands the microcomputer-B-dedicated main program data 51 as received on the SRAM 12 by way of the parallel bus 62 to thereby activate the microcomputer-B-dedicated main program data 51, whereupon the microcomputer-B makes transition to the ordinary operation mode.

In the ordinary operation mode, the analogue signal 72 inputted from the sensor 15 via the line 72 is sent to the A/D converter 16 to undergo analogue-to-digital conversion, the result of which is sent to the microcomputer-B 11 by way of a serial interface 63. The microcomputer-B 11 executes signal processing of the sensor signal on the basis of the control contents of the microcomputer-B-dedicated main program data 51 stored in the SRAM 12. The microcomputer-B 11 sends the result of the signal processing to the microcomputer-A 10 by way of the serial interface 60. The microcomputer-A 10 exchanges data as required with the external unit 2 via the serial interface 61.

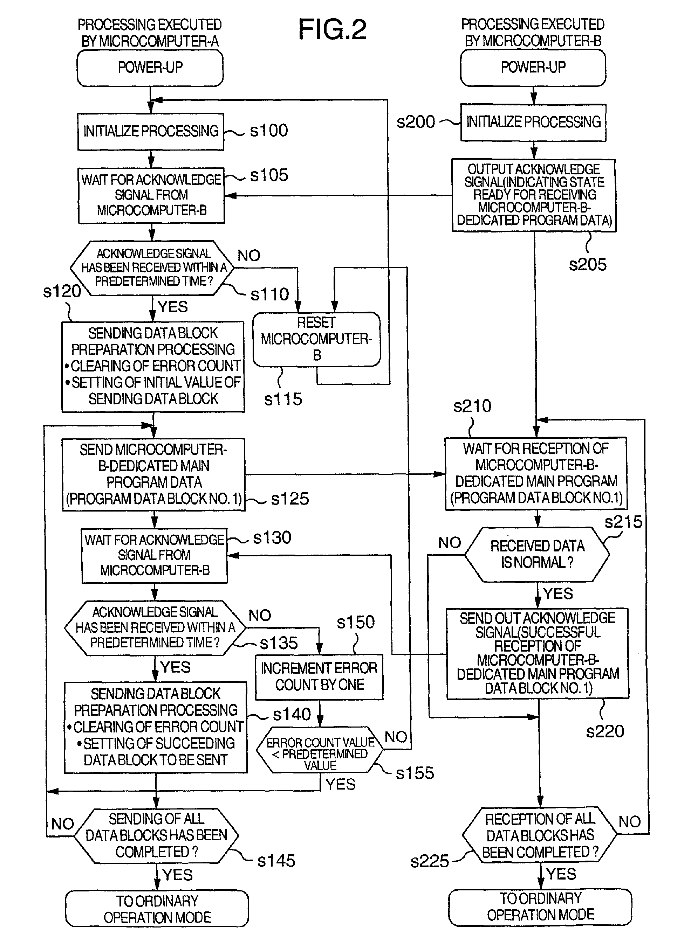

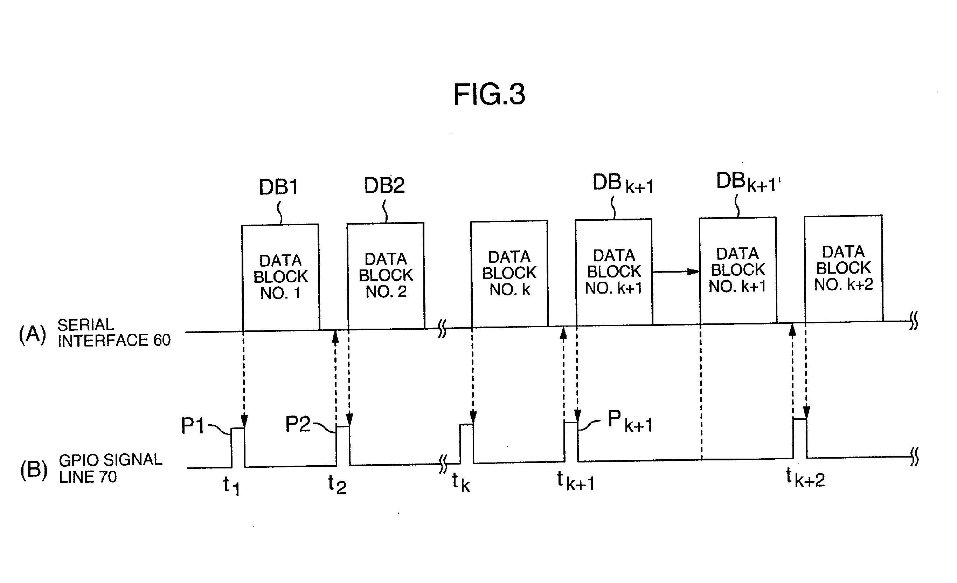

Next, referring to Figs. 2 and 3, description will be made concerning the contents of the power-up processing in the signal processing apparatus according to the instant embodiment of the invention.

Figure 2 is a flow chart for illustrating a power-up processing executed in the signal processing apparatus according to the first embodiment of the present invention, and Fig. 3 is a timing chart for illustrating the data transfer process when the power-up processing is executed in the signal processing apparatus according to the first embodiment of the present invention. Incidentally, the processing flow shown at the lefthand side in Fig. 2 illustrates the contents of the processing procedure executed by the microcomputer-A 10 while the processing flow shown at the righthand side in Fig. 2 illustrates the contents of the processing procedure executed by the microcomputer-B 11.

Upon power-up of the signal processing apparatus 1, the microcomputer-A 10 executes processing for initializing itself in a step s100 shown in Fig. 2 and waits for an acknowledge signal delivered from the microcomputer-B 11 in a step s105.

On the other hand, the microcomputer-B 11 executes the initialize processing in a step s200 and outputs an acknowledge signal indicating a data-reception-ready state (i.e., state ready for reception of data) in a step s205. As is shown in Fig. 3(B), the microcomputer-B 11 outputs the acknowledge signal P1 by way of the GPIO signal line 70 at a time point t1. Subsequently, the microcomputer-B 11 assumes a state waiting for the reception of the microcomputer-B-dedicated main program in a step s210.

In a step s110, the microcomputer-A 10 makes decision as to whether or not the acknowledge signal has been received from the microcomputer-B 11 within a predetermined time period. Unless the acknowledge signal has been received, the microcomputer-A 10 decides that the microcomputer-B 11 suffers abnormality in operation, to thereby reset the microcomputer-B in a step s115.

On the other hand, upon reception of the acknowledge signal from the microcomputer-B 11, the microcomputer-A 10 executes a processing for preparing data blocks to be sent to the microcomputer-B 11 in a step s120. Thereafter, this processing will be referred to as the sending data block preparation processing. The sending data block preparation processing may include, for example, clearing of an error count and setting of an initial value for the data block to be sent. In a step s125, the microcomputer-A 10 sends the data blocks of the microcomputer-B-dedicated main program data to the microcomputer-B 11. More specifically, the microcomputer-A 10 sends a data block NO. 1 DB1 by way of the serial interface 60, as can be seen in Fig. 3(A). After sending of this data block, the microcomputer-A 10 assumes the state awaiting for the acknowledge signal from the microcomputer-B 11.

On the other hand, the microcomputer-B 11 set to the state ready for receiving the data in the step s210 makes decision in a step s215 as to whether or not the program data block has normally been received. Upon normal reception of the program data block (i.e., when the decision step S215 results in affirmation "Yes"), the microcomputer-B 11 sends out the acknowledge signal in a step s220. More specifically, the microcomputer-B outputs an acknowledge signal P2 at a time point t2, as can be seen in Fig. 3(B). Unless the program data block has normally been received (i.e., when the decision step s215 results in negation "No"), no acknowledge signal is issued by the microcomputer-B 11, which then resumes the state waiting for the data in the step s210 through a decision step s225.

In a step s135, the microcomputer-A 10 makes decision as to whether or not the acknowledge signal has been received from the microcomputer-B 11 within a predetermined time period. In case the acknowledge signal P2 shown in Fig. 3(B) has been received, the microcomputer-A 10 executes the sending data block preparation processing in the step s140. The sending data block preparation processing includes, for example, clearing of the error count and preparation of a succeeding program data block to be sent.

On the other hand, when it is decided in the decision step s135 that no acknowledge signal has been received, the microcomputer-A 10 increments the error count by one in a step s150 and resends the same program data block through the processing in the step s125. By way of example, unless the acknowledge signal is sent from the microcomputer-B 11 after the microcomputer-A 10 has sent the data block NO. k+1 shown in Fig. 3(A) in response to the acknowledge signal Pk+1 shown in Fig. 3B, the microcomputer-A 10 sends out again the data block NO. k+1'.

Further, the microcomputer-A 10 checks a value of the error count in a step s155 to thereby decide whether or not the value of the error count has exceeded a predetermined value (indicating the number of times the error count has been incremented). In case the error count value has exceeded the predetermined value mentioned above, the microcomputer-A 10 resets the microcomputer-B 11 in the step s115, whereon the step s100 is resumed.

In a step s145, the microcomputer-A 10 decides whether or not sending of all the data blocks has been completed. In case this decision step s145 results in "Yes", the data transfer processing comes to an end, whereon the processing proceeds to the ordinary operation mode. Unless the data transfer has been completed yet, the microcomputer-A 10 returns to the step s125 to repeat the transfer of the program data block.

On the other hand, the microcomputer-B 11 decides in a step s225 whether or not reception of all the data blocks has been completed. When the reception of all the data blocks has been completed, the microcomputer-B 11 proceeds to the ordinary operation mode.

At this juncture, it should be mentioned that since the program data is usually of a relatively large size, sending of the program data through a single transfer (i.e., sending of all the program data at one time) may possibly bring about destruction of the data under the influence of disturbance such as noise or the like on the way of being transferred. For this reason, according to the teaching of the invention incarnated in the instant embodiment, the program data to be sent is divided into the unitary data blocks DB of a predetermined appropriate or given size for sending, as shown in Fig. 3(A). Further, in view of the necessity for the consistency check such as checksum on a unitary data block basis, the microcomputer-B for which the program data is destined sends back the acknowledge signal P1, ..., Pk+1 shown in Fig. 3(B) every time the data block transfer has successfully been completed.

As an example of the acknowledge signal, it can be conceived to send back a data block by way of the serial interface 60. In that case, however, a data block of 1-byte length at the shortest will be required as the acknowledge signal, which gives rise to a problem that a corresponding time is unwantedly required for sending back the data block as the acknowledge signal. Such being the circumstances, the invention incarnated in the instant embodiment teaches that instead of employing the data block for the serial communication as the acknowledge signal, the polarity of the single GPIO signal line is made use of for indicating the reception normality or reception abnormality. More specifically, when the received data is normal, the polarity of the GPIO signal line is set to high level and, if otherwise, held at a low level, as can be seen in Fig. 3(B).

The acknowledge signal P1, ..., Pk+1 indicates completion of preparation for the data reception or normality of data reception at the time point when the rising or leading edge makes appearance. The acknowledge signal P once assumed high level becomes low when the reception of the succeeding data block DB is started. In the case of the signal processing apparatus according to the instant embodiment of the invention, it is presumed that the acknowledge signal of the initial state is of low level with the rising or leading edge making appearance upon completion of preparation for data reception or upon normal reception of data. It should however be understood that the polarity of the acknowledge signal may be reversed such that the acknowledge signal of the initial state assumes high level with the falling or trailing edge indicating the completion of preparation for data reception or the normal data reception. By holding the acknowledge signal at a low level when reception of the data block NO. k+1 by the microcomputer-B 11 is abnormal in the transfer of the data block NO. k+1, the microcomputer-A 10 makes decision that the reception of the data block is abnormal unless the acknowledge signal has assumed the high level within a predetermined time and sends again the data block NO. k+1.

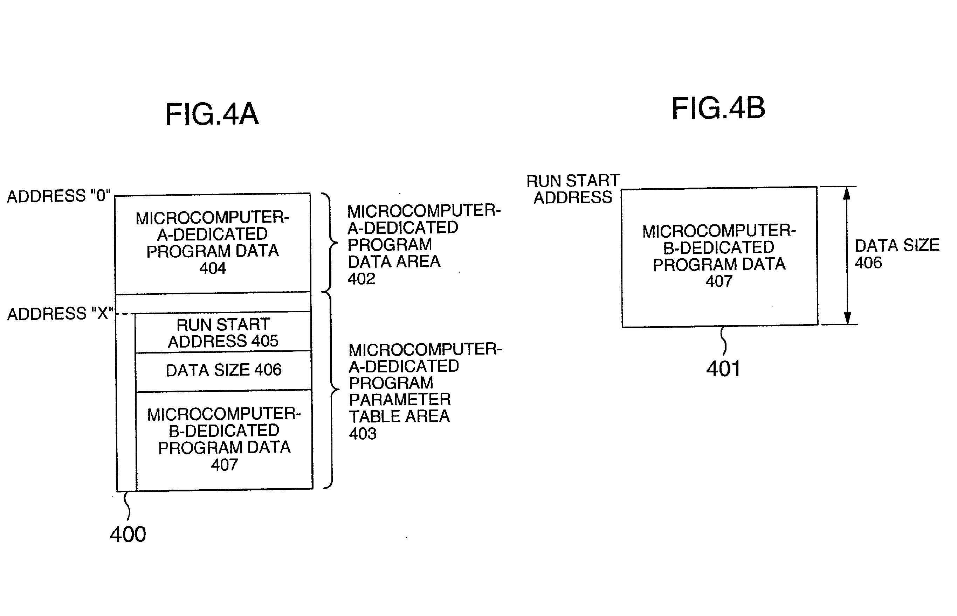

Next, referring to Figs. 4A and 4B, description will be made of the memory map adopted in the signal processing apparatus according to the instant embodiment of the invention.

Figure 4A shows a memory map of the flash ROM 13 employed in the signal processing apparatus according to the first embodiment of the present invention, and Fig. 4B shows a memory map of the SRAM employed in the same apparatus.

As described hereinbefore in conjunction with Fig. 1, in the signal processing apparatus according to the instant embodiment of the invention, only one flash ROM is employed, wherein the microcomputer-A-dedicated program data 50 and the microcomputer-B-dedicated main program data 51 for the microcomputer-A 10 and the microcomputer-B 11, respectively, are stored in the flash ROM 13. Under the circumstances, in the signal processing apparatus according to the instant embodiment of the invention, both the microcomputer-A-dedicated program data 50 and the microcomputer-B-dedicated main program data 51 are managed by consolidating them into one program data.

As can be seen in Fig. 4A, the flash ROM memory map 400 of the flash ROM 13 incorporated in the microcomputer-A 10 is composed of a microcomputer-A-dedicated program data area 402 and a microcomputer-A-dedicated program parameter table area 403.

Microcomputer-A-dedicated program data 404 are mapped at an address "0" of the flash ROM memory map 400. On the other hand, microcomputer-B-dedicated program data 407 are mapped, starting from the address "X" representing the microcomputer-A-dedicated program parameter table area 403. Firstly, added to the microcomputer-B-dedicated program data 407 at a leading end thereof are a run start address 405 for the program expanded on the SRAM upon power-up of the signal processing apparatus and the information concerning the data size 406. In succession, the microcomputer-B-dedicated program data 407 is arrayed in the memory address order in which the program is expanded on the SRAM.

Further, as shown in Fig. 4B, the run start address 405 shown in Fig. 4A is allocated to the leading end of the memory map 401 of the SRAM 12 connected to the microcomputer-B 11. When the run start address 405, the data size 406 and the microcomputer-B-dedicated program data 407 are transferred to the microcomputer-B 11, the microcomputer-B-dedicated program data 407 is expanded on the SRAM 12 by the microcomputer-B 11 on the basis of the run start address 405.

By virtue of the structure of the microcomputer-B-dedicated main program data described above, the first data block NO. 1 shown in Fig. 3(A) contains the information concerning the start address of the main program for the microcomputer-B 11 and the size thereof. In succession, the program data are transferred, being carried by the data block NO. 2 and those following.

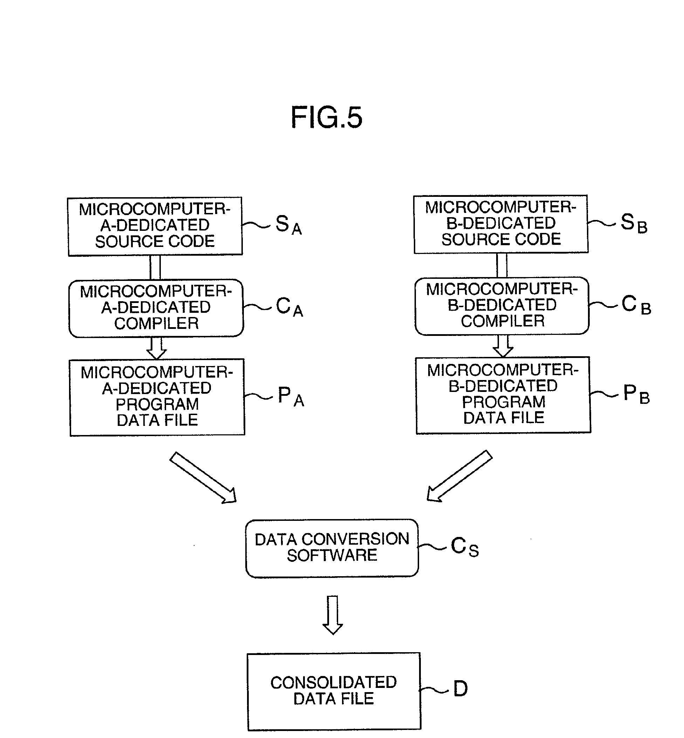

Next, referring to Fig. 5, description will be made of a procedure for generating the flash ROM memory map 400 in the signal processing apparatus according to the instant embodiment of the invention. Parenthetically, Fig. 5 is a flow chart for illustrating a procedure of generating the flash ROM memory map 400 in the signal processing apparatus according to the first embodiment of the present invention.

A microcomputer-A-dedicated compiler $C_A$ executes a processing for compiling a microcomputer-A-dedicated source code $S_A$ to thereby convert it into a microcomputer-A-dedicated program data file $P_A$. Similarly, a microcomputer-B-dedicated compiler $C_B$ executes a processing for compiling a microcomputer-B-dedicated source code $S_B$ to thereby convert it into a microcomputer-B-dedicated program data file $P_B$. The microcomputer-A-dedicated program data file $P_A$ is of a data format capable of being arrayed on the flash ROM 13 incorporated in the microcomputer-A 10, while the microcomputer-B-dedicated program data file $P_B$ is of a data format capable of being arrayed on the SRAM 12 connected to the microcomputer-B.

Data conversion software $C_s$ is designed to generate a consolidated data file D of the format capable of being arrayed on the flash ROM 13 by reading the microcomputer-A-dedicated program data file $P_A$ and the microcomputer-B-dedicated program data file $P_B$. The microcomputer-A-dedicated program data files $P_A$ is arrayed in the memory address order, starting from the address "0". Further, the run start address of the microcomputer-B-dedicated program data file $P_B$ and the data size thereof are arithmetically determined, whereon the run start address is disposed at the address "X" with the data size being disposed at the address succeeding to the address "X", while the microcomputer-B-dedicated program data is arrayed at the address which succeeds to the address "X". In this conjunction, is to be added that the run start address, the address of the data size information and the address of the microcomputer-B-dedicated program data on the flash ROM can be determined in accordance with the undermentioned expressions (1), (2) and (3), respectively.

$$\text{(Run Start Address on Flash ROM)} = \text{Address "X"} \tag{1}$$

$$\text{(Address of Data Size on Flash ROM)} = \text{Address "X"} + \text{(Size of Run Start Address Area)} \tag{2}$$

(Address of Microcomputer-B-Dedicated Program

Data on Flash ROM) = Address "X" + (Size of Run Start

Address Area) + (Size of Data Size Area) + (Address of

Microcomputer-B-Dedicated Program Data on SRAM)        (3)

By executing the data conversion processing described above, a single consolidated file D can be generated by consolidating or integrating the microcomputer-A-dedicated program data file $P_A$ and the microcomputer-B-dedicated program data file $P_B$. Management of program version for the signal processing apparatus can be performed on a consolidated data file (D) basis. Besides, in the course of manufacturing the signal processing apparatus, the program data can be embedded through a single process step.

Although the foregoing description has been made on the assumption that the flash ROM 13 is incorporated in the microcomputer-A 10, it goes without saying that the flash ROM 13 may equally be connected to the microcomputer-A 10 by way of an address bus and a data bus.

As is apparent from the foregoing, even in the case where a plurality of microcomputers are employed together with one flash ROM, the number of constituent parts of the signal processing apparatus can be decreased by virtue of the arrangement that the program data file stored in the flash ROM incorporated in one microcomputer is transferred to other microcomputer(s) through the activation processing.

Besides, because the program data is transferred through the medium of the serial interface, the size of the base plate of the signal processing apparatus can be reduced when compared with the case where parallel interface is employed.

Additionally, since the program data of plural microcomputers can be managed as one consolidated data file, version-up of software can easily be realized.

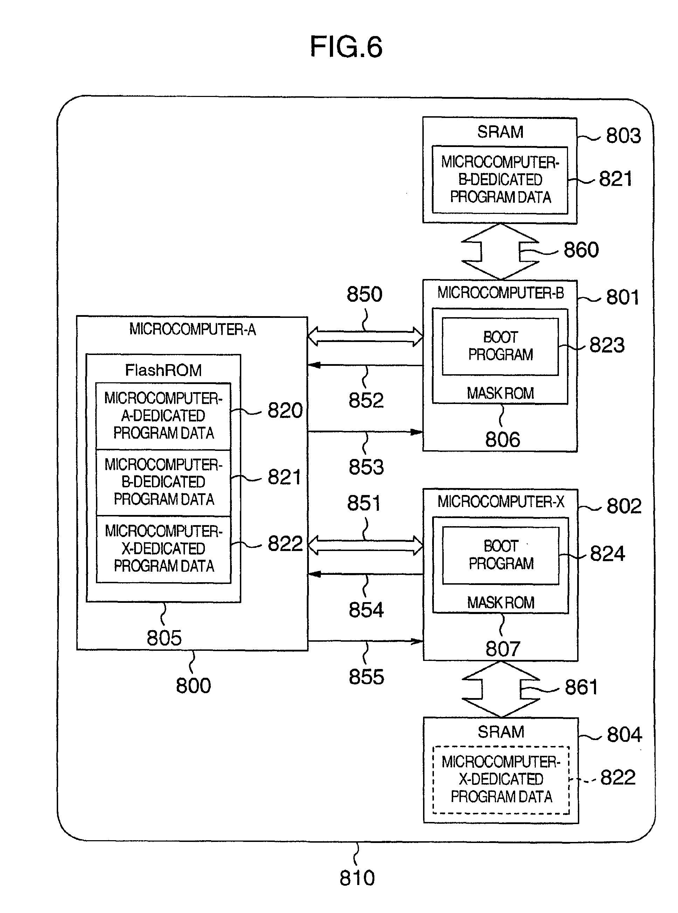

Next, the signal processing apparatus according to a second embodiment of the present invention will be described by reference to Fig. 6.

Figure 6 is a system block diagram showing generally and schematically a configuration of the signal processing apparatus according to the second embodiment of the present invention.

According to the instant embodiment, the signal processing apparatus denoted generally by a reference numeral 810 includes therein three microcomputer-A 800, a microcomputer-B 801 and a microcomputer-X 802 and additionally SRAMs 803 and 804.

The microcomputer-B 801 is provided with a mask ROM 806 for storing a boot program 823 which is activated upon power-up of the signal processing apparatus, while the microcomputer-X 802 is equipped with a mask ROM 807 for storing a boot program 824 which is activated when the apparatus is powered up. The microcomputer-A 800 and the microcomputer-B 801 are interconnected through a serial interface 850, a GPIO signal line 852 and a GPIO signal line 853. The microcomputer-A 800 and the microcomputer-X 802 are interconnected through a serial interface 851, a GPIO signal line 854 and a GPIO signal line 855.

The microcomputer-A 800 stores in a flash ROM 805 the microcomputer-A-dedicated program data 820, microcomputer-B-dedicated program data 821 and microcomputer-X-dedicated program data 822 for the microcomputer-A 800, the microcomputer-B 801 and the microcomputer-X 802, respectively, which data are required for executing processings in the ordinary operation mode. Upon power-up of the signal processing apparatus, the microcomputer-A 800 transfers the microcomputer-B-dedicated program data 821 and the microcomputer-X-dedicated program data 822 to the microcomputer-B 801 and the microcomputer-X 802 via the serial interfaces 850 and 851, respectively. The microcomputer-B 801 and the microcomputer-X 802 expand the program data 821 and 822 on the SRAM 803 connected via a parallel buses 860 and 861, respectively, whereupon operations of these microcomputers 801 and 802 make transition to the ordinary operation mode.

With the arrangement described above, it is possible to store the program data for the three microcomputers in one flash ROM, activate the individual microcomputers incorporated in the signal processing apparatus by transferring the program data via the serial interfaces upon power-up of the apparatus, and render the microcomputers to transit to the ordinary operation mode.

Further, in conjunction with the management of the program data, it should be mentioned that since the run start addresses of the program data for the microcomputer-B 801 and the microcomputer-X 802 and the data size as well as the program data thereof are arrayed in the table parameter area of the program for the microcomputer-A 800, it is possible to generate the single consolidated file.

As is apparent from the above, the signal processing apparatus incorporating three or more microcomputers can be implemented in the structure similar to the apparatus incorporating two microcomputers.

With the teachings of the present invention incarnated in the embodiments described above, the number of parts can be reduced in the signal processing apparatus having a plurality of microcomputers and a shared ROM.

**EP 1 280 066 A2**

Many modifications and variations of the present invention are possible in the light of the above techniques. It is therefore to be understood that within the scope of the appended claims, the invention may be practiced otherwise than as specifically described.

**Claims**

1. A signal processing apparatus, comprising:

   first computing means (10: 800) and second computing means (11: 801; 802) operating independent of each other; and
   interface means (60, 70, 71: 850, 852, 853; 851, 854, 855) interconnecting said first computing means (10; 800) and said second computing means (11; 801; 802),

   wherein upon power-up of said signal processing apparatus, said first computing means (10; 800) transfers data to said second computing means (11: 801; 802) by way of said interface means (60, 70, 71: 850, 852, 853; 851, 854, 855), whereupon signal processing in an ordinary operation mode is executed.

2. A signal processing apparatus according to claim 1,
   wherein said first computing means (10: 800) transfers the data required by said second computing means (11: 801; 802).

3. A signal processing apparatus according to claim 1, further comprising:

   data rewritable nonvolatile memory means (13: 805),
   said nonvolatile memory means (13) having a program memory map (400) corresponding to said first computing means (10: 800),

   wherein a run start address (405) of said second computing means (11: 801; 802), a program data size (406) and program data (407) therefor are arrayed in a parameter table area (403) of said program memory map (400) corresponding to said first computing unit (10: 800).

4. A signal processing apparatus according to claim 1,
   wherein said interface means includes a serial interface (60: 850; 851) and general-purpose signaling means (70, 71: 852, 853; 854, 855).

5. A signal processing apparatus according to claim 4,
   wherein said first and second computing means (10: 800, 11: 801; 802) are so arranged that upon power-up of said signal processing apparatus, said first computing means (10: 800) firstly transfers data of a predetermined unitary amount to said second computing means (11: 801; 802) via said serial interface (60: 850; 851), while said second computing means (11: 801; 802) inverts polarity of said general-purpose signaling means (70, 71: 852, 853; 854, 855) after lapse of a predetermined time since the end of the first data transfer, and when said first computing means (10: 800) starts again the data transfer, said second computing means (11: 801; 802) inverts again the polarity of said general-purpose signaling means (70, 71: 852, 853; 854, 855), to thereby carry out the data transfer upon power-up of said signal processing apparatus through repetition of the data transfer and the polarity inversion of said general-purpose signaling means (70, 71: 852, 853; 854, 855), whereupon signal processing in an ordinary operation mode is executed.

6. A signal processing apparatus according to claim 1, further comprising:

   read-only memory means (14; 806; 807) incorporated in said second computing means (11: 801; 802); and
   volatile memory means (12; 803; 804) incorporated in said second computing means (11: 801; 802) or connected thereto by way of an address bus and a data bus (62; 860; 861).

7. A signal processing apparatus, comprising:

   a first computing unit (10: 800) and a second computing unit (11: 801; 802) operating independent of each other; and

8

an interface (60, 70, 71: 850, 852, 853; 851, 854, 855) interconnecting said first computing unit (10; 800) and said second computing unit (11; 801; 802),

wherein upon power-up of said signal processing apparatus, said first computing unit (10; 800) transfers data to said second computing unit (11: 801; 802) by way of said interface (60, 70, 71: 850, 852, 853; 851, 854, 855) whereupon signal processing in an ordinary operation mode is executed.

8. A signal processing apparatus according to claim 7,
wherein said first computing unit (10: 800) transfers the data required by said second computing unit (11: 801; 802).

9. A signal processing apparatus according to claim 7, further comprising:

a data rewritable nonvolatile memory (13: 805),
said nonvolatile memory (13: 805) having a program memory map (400) corresponding to said first computing unit (10: 800),

wherein a run start address (405) of said second computing unit (11: 801; 802), a program data size (406) and program data (407) therefor are arrayed in a parameter table area (403) of said program memory map (400) corresponding to said first computing unit (10: 800).

10. A signal processing apparatus according to claim 7,
wherein said interface includes a serial interface (60: 850; 851) and a general-purpose signal line (70, 71: 852, 853; 854, 855).

11. A signal processing apparatus according to claim 10,
wherein said first and second computing units (10: 800, 11: 801; 802) are so arranged that upon power-up of said signal processing apparatus, said first computing unit (10: 800) firstly transfers data of a predetermined unitary amount to said second computing unit (11: 801; 802) via said serial interface (60: 850; 851), while said second computing unit (11: 801; 802) inverts polarity of said general-purpose signal line (70, 71: 852, 853; 854, 855) after lapse of a predetermined time since the end of the first data transfer, and when said first computing unit (10: 800) starts again the data transfer, said second computing unit (11: 801; 802) inverts again the polarity of said general-purpose signal line (70, 71: 852, 853; 854, 855), to thereby carry out the data transfer upon power-up of said signal processing apparatus through repetition of the data transfer and the polarity inversion of said general-purpose signal line (70, 71: 852, 853; 854, 855), whereupon signal processing in an ordinary operation mode is executed.

12. A signal processing apparatus according to claim 7, further comprising:

a read-only memory incorporated in said second computing unit (11: 801; 802); and
a volatile memory incorporated in said second computing unit (11: 801; 802) or connected thereto by way of an address bus and a data bus.

# FIG.1

SIGNAL PROCESSING APPARATUS — 1

SRAM — 12
MICROCOMPUTER-B-DEDICATED MAIN PROGRAM DATA — 51

MICROCOMPUTER-A — 10

FlashROM — 13
MICROCOMPUTER-A-DEDICATED PROGRAM DATA — 50
MICROCOMPUTER-B-DEDICATED MAIN PROGRAM DATA — 51

60

62

MICROCOMPUTER-B — 11
MICROCOMPUTER-B BOOT PROGRAM DATA — 52
MASK ROM — 14

70

71

63

A/D CONVERTER — 16

SENSOR — 15

72

EXTERNAL UNIT — 2

61

EP 1 280 066 A2

## FIG.2

PROCESSING EXECUTED
BY MICROCOMPUTER-A

PROCESSING EXECUTED
BY MICROCOMPUTER-B

POWER-UP

POWER-UP

INITIALIZE PROCESSING — s100

s200 — INITIALIZE PROCESSING

WAIT FOR ACKNOWLEDGE
SIGNAL FROM
MICROCOMPUTER-B — s105

OUTPUT ACKNOWLEDGE
SIGNAL(INDICATING STATE
READY FOR RECEIVING
MICROCOMPUTER-B-
DEDICATED PROGRAM DATA)

ACKNOWLEDGE SIGNAL
HAS BEEN RECEIVED WITHIN A
PREDETERMINED TIME ? — NO

s120
s110

YES

s205

RESET
MICROCOMPUTER-
B

s115

SENDING DATA BLOCK
PREPARATION PROCESSING
• CLEARING OF ERROR COUNT
• SETTING OF INITIAL VALUE OF
SENDING DATA BLOCK

SEND MICROCOMPUTER-
B-DEDICATED MAIN
PROGRAM DATA
(PROGRAM DATA BLOCK NO.1) — s125

s210

WAIT FOR RECEPTION OF
MICROCOMPUTER-B-
DEDICATED MAIN PROGRAM
(PROGRAM DATA BLOCK NO.1)

WAIT FOR ACKNOWLEDGE
SIGNAL FROM
MICROCOMPUTER-B — s130

s215

RECEIVED DATA
IS NORMAL ? — NO

ACKNOWLEDGE SIGNAL
HAS BEEN RECEIVED WITHIN A
PREDETERMINED TIME ? — NO

s135

s150

YES

YES

INCREMENT ERROR
COUNT BY ONE

s140

SEND OUT ACKNOWLEDGE
SIGNAL(SUCCESSFUL
RECEPTION OF
MICROCOMPUTER-B-
DEDICATED MAIN PROGRAM
DATA BLOCK NO.1)

SENDING DATA BLOCK
PREPARATION PROCESSING
• CLEARING OF ERROR COUNT
• SETTING OF SUCCEEDING
DATA BLOCK TO BE SENT

ERROR COUNT VALUE
< PREDETERMINED
VALUE — NO

s155

s220

YES

SENDING OF ALL
DATA BLOCKS HAS BEEN
COMPLETED ? — NO

s145

RECEPTION OF ALL
DATA BLOCKS HAS
BEEN COMPLETED ? — NO

s225

YES

YES

TO ORDINARY
OPERATION MODE

TO ORDINARY
OPERATION MODE

# FIG.3

DB1    DB2        $DB_{k+1}$    $DB_{k+1}'$

| DATA BLOCK NO. 1 | DATA BLOCK NO. 2 | DATA BLOCK NO. k | DATA BLOCK NO. k+1 | DATA BLOCK NO. k+1 | DATA BLOCK NO. k+2 |

(A) SERIAL INTERFACE 60

(B) GPIO SIGNAL LINE 70

P1    P2        $P_{k+1}$

$t_1$    $t_2$    $t_k$    $t_{k+1}$    $t_{k+2}$

EP 1 280 066 A2

# FIG.4A

ADDRESS "0"
ADDRESS "X"

| MICROCOMPUTER-A-DEDICATED PROGRAM DATA 404 | MICROCOMPUTER-A-DEDICATED PROGRAM DATA AREA 402 |

RUN START ADDRESS 405

DATA SIZE 406

MICROCOMPUTER-B-DEDICATED PROGRAM DATA 407

MICROCOMPUTER-A-DEDICATED PROGRAM PARAMETER TABLE AREA 403

400

# FIG.4B

RUN START ADDRESS

MICROCOMPUTER-B-DEDICATED PROGRAM DATA 407

DATA SIZE 406

401

EP 1 280 066 A2

# FIG.5

MICROCOMPUTER-
A-DEDICATED
SOURCE CODE — $S_A$

MICROCOMPUTER-
B-DEDICATED
SOURCE CODE — $S_B$

MICROCOMPUTER-
A-DEDICATED
COMPILER — $C_A$

MICROCOMPUTER-
B-DEDICATED
COMPILER — $C_B$

MICROCOMPUTER-
A-DEDICATED
PROGRAM
DATA FILE — $P_A$

MICROCOMPUTER-
B-DEDICATED
PROGRAM
DATA FILE — $P_B$

DATA CONVERSION
SOFTWARE — $C_S$

CONSOLIDATED
DATA FILE — D

# FIG.6